Europäisches Patentamt

**European Patent Office**

Office européen des brevets

(19)

(11) Numéro de publication: **0 010 494**
**B1**

(12)

# FASCICULE DE BREVET EUROPEEN

(45) Date de publication du fascicule du brevet:
**18.04.84**

(21) Numéro de dépôt: **79400748.4**

(22) Date de dépôt: **15.10.79**

(51) Int. Cl.³: **G 11 B 5/09**, G 11 B 5/58

(54) **Mode d'écriture d'informations sur un support d'enregistrement magnétique.**

(30) Priorité: **19.10.78 FR 7829847**

(43) Date de publication de la demande:
**30.04.80 Bulletin 80/9**

(45) Mention de la délivrance du brevet:
**18.04.84 Bulletin 84/16**

(84) Etats contractants désignés:
**DE GB IT NL SE**

(56) Documents cités:
**DE - A - 1 474 390**
**FR - A - 2 309 948**
**FR - A - 2 346 806**
**FR - A - 2 347 742**
**FR - A - 2 347 747**
**FR - A - 2 365 178**
**FR - A - 2 383 496**
**US - A - 3 534 344**

**INSTITUTE OF ELECTRICAL AND ELECTRONICS ENGINEERS, "Computer Society International Conference", Spring Conference 14-Digest of Papers from Compcon 77, San Francisco, 28 février - 3 mars 1977, New York, IEEE (US) ZEISSNER: "Design of a fixed disc moving head drive", pages 162-163**
**IBM TECHNICAL DISCLOSURE BULLETIN, vol. 20, no. 8, janvier 1978, New York (US) DEREMER et al. "Sector servo method", pages 3243-3247**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **Maury, Christian, 2 allée du Dauphiné, F-78140 Velizy (FR)**

(74) Mandataire: **Gouesmel, Daniel, 94, avenue Gambetta, F-75020 Paris (FR)**

ACTORUM AG

Mode d'écriture d'informations sur un support d'enregistrement magnétique

La présente invention concerne un mode d'écriture d'informations sur un support d'enregistrement magnétique. Elle est plus particulièrement applicable aux mémoires à disques magnétiques.

Dans les systèmes de traitement de l'information, l'utilisation de mémoires à disques magnétiques est de plus en plus fréquente en raison de leur capacité de stockage et du temps relativement court mis par les têtes magnétiques d'écriture/lecture à accéder à une information contenue en un point quelconque des disques à partir du moment où elles ont reçu l'ordre d'accéder à cette information.

On sait que les disques magnétiques portent les informations sous forme codée sur des pistes d'enregistrement conentriques circulaires dont la largeur n'excède pas quelques centièmes de millimètres et qui sont disposées sur leurs deux faces.

On repère les pistes en leur affectant un numéro d'ordre j, j étant un nombre entier variant de 0 à $N-1$, N étant le nombre total des pistes d'enregistrement. On appelle adresse, l'expression codée de numéro d'ordre j d'une piste. Dans ce cas, l'adresse est dite «adresse absolue».

Les codes les plus fréquemment utilisées sont des codes binaires.

Les disques magnétiques sont entraînés par un moteur électrique et ont une vitesse de rotation constante.

Dans la pratique courante, et plus particulièrement dans le cas des mémoires qui ne comportent qu'un nombre limité de disques (généralement inférieur à 4 ou 5), les informations sont enregistrées sur chacune des faces des disques de la manière suivante. Un maximum de place est réservé à l'enregistrement des données destinées à être traitées par le système de traitement de l'information auquel ces mémoires appartiennent. Un minimum de place est réservé d'une part à l'enregistrement des adresses des pistes et d'autre part, à l'entregistrement d'informations nécessaires à l'asservissement de position au-dessus des pistes de la tête magnétique associée à cette face, ces informations étant encore appelées «Informations de position fine». On désignera par la suite sous le nom d'informations de repérage des pistes, aussi bien les adresses de celles-ci, que les informations d'asservissement de position. On peut donc dire que l'ensemble des informations enregistrées sur une face d'un disque, contient un sous-ensemble d'informations de repérage des pistes.

On considère pour simplifier, un seul disque. De préférence à chaque face du disque, est associée une seule tête magnétique d'écriture/lecture, appelée encore transducteur magnétique d'écriture/lecture.

Dans la pratique courante, ainsi qu'il est décrit dans le brevet français N° 2.346.806 déposé le 31 Mars 1976 au nom de la Compagnie Honeywell Bull sous le titre «Mode d'écriture d'adresses sur un support d'enregistrement magnétique», les informations contenues sur chaque face du disque sont de préférence réparties sur des secteurs circulaires égaux et edjacents $S_0$, $S_1$, ..., $S_i$, ..., $S_n$. Habituellement, une face du disque est divisée en plusieurs dizaines de secteurs (le plus souvent 40 à 50).

Lorsque la face du disque magnétique associée à la tête magnétique défile devant celle-ci, le secteur $S_0$ est lu par la tête avant le secteur $S_1$, le secteur $S_1$ avant le secteur $S_2$ et ainsi de suite. On dit alors que le secteur $S_0$ précède le secteur $S_1$, que le secteur $S_1$ précède le secteur $S_2$, que le secteur $S_i$ précède le secteur $S_{i+1}$ etc...

Plus généralement, lorsqu'on considère deux informations $I_{k-1}$ et $I_k$ qui se suivent sur une même piste de numéro d'ordre j de ladite face, on dit que l'information $I_{k+1}$ prédède l'information $I_k$ si elle est lue par la tête avant cette dernière ou encore que l'information $I_k$ suit l'information $I_{k-1}$. Le raisonnement est également valable pour plusieurs groupes d'informations adjacentes $G_k$ et $G_{k-1}$.

Chaque secteur $S_i$ est divisé en deux aires inégales. L'aire la plus grande comprend les données destinées à être traitées par le système de traitement de l'information auquel appartient la mémoire à disques tandis que l'aire la plus petite comprend les informations de repérage des pistes. Pour simplifier, on désignera par la suite sous le nom de données à traiter, les données contenues dans l'aire la plus grande. Pour chaque secteur, l'aire la plus petite est divisée en plusieurs zones appelées «zones de référence» en nombre égal à celui des pistes, chaque piste étant associée à une seule et même zone.

Il est rappelé que le mot anglais «bit» désigne à la fois un chiffre binaire 1 ou 0 et toute matérialisation de ce chiffre soit sous forme d'enregistrement magnétique, soit sous forme de signal électrique analogique ou logique, un signal logique ne pouvant prendre que deux valeurs dites «zéro logique» ou «un logique» et un signal analogique étant défini comme un signal dont la tension peut varier de façon continue entre deux valeurs limites positive et/ou négative. Pour simplifier, on pourra désigner par la suite sous le nom de «bit» toute information ou donnée enregistrée sur le disque. En particulier, les informations de repérage des pistes seront également appelées «bit» de repérage des pistes.

On sait que, pour enregistrer une suite d'informations sur un disque magnétique, on créé sur chaque piste de celui-ci une succession de petits domaines magnetiques appelés «aimants élémentaires» de longueur variable répartis sur toute la longueur de la piste et ayant alternativement des inductions magnétiques de même module et de sens opposé, de direction parallèle à la surface du disque. Le nombre d'aimants élémentaires d'induction magnétique positive est égal au nombre d'aimants élémentaires d'induction magnétique négative.

La frontière géographique entre deux aimants élémentaires adjacents où les inductions magnétiques sont de sens opposé définit un changement de sens de magnétisation, appelé encore «transition magnétique».

Toute transition magnétique peut avoir deux natures différentes, à savoir:

– lorsque la face du disque qui défile devant la tête magnétique et lorsque celle-ci voit défiler successivement un aimant élémentaire d'induction négative et un aimant élémentaire d'induction positive, on dit que la transition magnétique est positive;

– lorsque, au contraire, elle voit défiler successivement un aimant élémentaire d'induction positive et un aimant élémentaire d'induction négative, on dit que la transition magnétiques est négative.

Ainsi qu'il est décrit dans le brevet français N° 2.346.806, précité, chaque zone de référence comporte d'une part des informations de position fine, et d'autre part des bits d'adresse absolue. Plus précisément, chaque zone comprend une pluralité de cellules de longueur égale, dont chacune comprend une information de position fine, occupant soit une première position $P_1$ soit une secont position $P_2$ et un bit d'adresse absolue occupant soit une troisième position $P_3$, soit une quatrième position $P_4$. La valeur, tant de l'information de position fine que du bit d'adresse absolue dépend de la position qu'il occupe.

Ainsi, on observe que dans chaque zone de référence, les informations de position fine et les bits d'adresse absolue sont alternés, c'est-à-dire qu'une information de position fine précède un bit d'adresse, elle-même précédant une information de position fine et ainsi de suite. L'inconvénient de ce mode d'écriture d'informations de repérage des pistes dans les zones de référence est que les signaux de lecture correspondants à un premier type d'information (information de position fine par exemple), peuvent venir perturber les signaux correspondants à un second type d'informations (les bits d'adresse absolue par exemple).

Le brevet français N° 2.426.940 déposé le 26 Mai 1978 sous le titre «Procédé de contrôle de zones de référence d'un support d'informations et dispositif pour le mettre en œuvre» par la Compagnie Internationale pour l'Informatique CII Honeywell Bull décrit un mode d'écriture d'informations de repérage des pistes dans les zones de référence qui remédie partiellement aux inconvénients mentionnés ci-dessus. Dans chacune des zones de référence, les informations d'adresse absolue sont contenues dans 11 cellules elles-mêmes précédées par 6 cellules contenant à la fois des informations de position fine et des informations dont l'exploitation des signaux par les circuits de lecture/écriture de la mémoire à disques permet de déterminer le gain des amplificateurs de cas circuits de telle sorte que la précision de lecture des bits d'adresse absolue et des informations de position fine soit la plus grande possible. Toutefois, dans ce mode d'écriture, on peut constater que les informations de position fine et celles permettant la détermination du gain des amplificateurs des circuits de lecture sont mélangés les unes aux autres.

Que ce soit dans le mode d'écriture décrit dans le brevet 2.346.806 ou dans le mode d'écriture décrit dans le brevet 2.426.940, les informations de position fine, les bits d'adresse absolue, et les informations permettant le contrôle du gain des amplificateurs des circuits de lecture sont constitués par une seule transition magnétique.

L'inconvénient d'utiliser une seule transition magnétique pour l'écriture des informations de repérage des pistes est que la probabilité pour que les circuits de lecture/écriture de la mémoire à disques prennent en compte un signal parasite n'est pas négligeable, un signal parasite étant défini comme un signal délivré par la tête lorsque la zone défile devant elle, qui ne correspond pas à l'une des transitions magnétiques écrites dans la zone de référence. L'apparition de signaux parasites peut survenir pour différentes raisons, variation de position de la tête magnétique de lecture par rapport à la face du disque qui lui est associé, défaut d'enregistrement de la face du disque, présence de poussières entre la face et la tête magnétique.

Par conséquent, des erreurs peuvent survenir dans le positionnement de la tête magnétique au-dessus de la face du disque qui lui et associée, et le centrage de cette tête par rapport à la piste contenant les informations qu'elle est en train de lire peut être insuffisamment précis.

Le mode d'écriture d'informations dans les zones de référence décrit dans l'IBM Technical Disclosure Bulletin Volume 20 N° 8 de Janvier 1970 par DEREMER permet de remédier aux inconvénients mentionnés ci-dessus en décomposant la zone de référence en trois groupes distincts d'informations, chaque groupe comprenant des informations constituées par une double transition magnétique, la première transition étant de signe opposé à la seconde. L'utilisation de la double transition magnétique permet de supprimer tout erreur dans la détermination de la valeur de l'information. Ce mode d'ecriture est plus fiable et plus sûr que le mode d'écriture dans lequel toute information est définie par une seule transition magnétique.

Les trois groupes distincts d'informations décrits par DEREMER sont les suivants:

– un premier groupe d'informations de synchronisation comprenant quatre double transitions magnétiques, suivies d'une cellule où il y a absence de transition magnétique, elle même suivie par une cellule comprenant une seule transition magnétique,

– un second groupe d'informations donnant l'adresse relative de la piste, qui, ne comprend qu'une seule double transition magnétique dont la position varie suivant la piste en regard de laquelle la tête magnétique se trouve, les informations d'adresse relative se reproduisant identiquement à elle-mêmes toutes les quatre zones de référence,

– un groupe d'informations de position fine comprenant quatre double transitions disposées de telle façon qu'il y a rupture de continuité d'une double transition d'une zone à la double transition de la zone voisine.

Le mode d'écriture de DEREMER comporte les inconvénients suivants:

–les tois groupes d'informations précédemment cités sont différents entre eux en ce sens qu'ils ne comportent pas le même nombre de cellules, que ces cellules élémentaires (contenant chacune pour la plupart, une double transition magnétique) n'ont pas la même longueur, et ce d'un groupe d'informations à l'autre, que chacun des trois groupes n'a pas la même longueur. Ainsi, le premier groupe de synchronisation comporte quatre cellules ayant chacune une double transition magnétique suivi d'une cellule n'ayant aucune transition magnétique elle-même suivie d'une demi-cellule comportant une seule transition magnétique, soit en tout cinq cellules et demie pour le premier groupe. Le groupe d'adresses relative comporte und seule double transition magnétique, alors que le groupe d'informations de position fine comporte quatre double transitions magnétiques,

– de plus de fait d'utiliser une adresse relative présente des inconvénients: on n'a pas une connaissance immédiate de l'adresse réelle en regard de laquelle se trouve le transducteur. Le temps d'accès aux informations des pistes du disque est plus grand car le mode de détermination de l'adresse relative est plus long que le mode de détermination d'une adresse absolue. En effet chez DEREMER, pour déterminer l'adresse de la piste au-dessus de laquelle elle se trouve il faut d'abord compter les groupes d'informations et ensuite repérer chaque piste au sein de ce groupe. On montre de plus, que le fait d'utiliser une adresse relative entraîne une limitation de la vitesse de déplacement de la tête,

– le mode d'écriture des informations de DEREMER présente également l'inconvénient que les doubles transitions constituant les informations de position fine présentent une rupture de continuité d'une double transition d'une zone à la double transition de la zone voisine. En effet, cette rupture de continuité entre les informations est une perte de place considérable, ce qui est gênant lorsque l'on cherche à obtenir un nombre d'informations extrêmement grand sur une face de disque magnétique.

La présente invention permet de remédier à ces inconvénients, en combinant les avantages des modes d'écriture décrits dans les brevets français 2.346.806 et 2.426.940 à savoir écriture de l'adresse absolue, et du mode d'écriture décrit dans l'IBM Technical Disclosure Bulletin à savoir la division de la zone en trois groupes d'informations parfaitement distincts les uns des autres, chaque information étant représentée par la présence ou l'absence d'une double transition magnétique, la première étant de signe opposée à la seconde (dibits), sans avoir les inconvénients, mentionnés plus haut. Ceci est obtenu en divisant chaque zone de référence en trois groupes d'informations de longueur parfaitement égale, comprenant le même nombre de cellules, toutes les cellules ayant la même longueur. De ce fait il n'y a aucune rupture de continuité entre les différentes cellules de chacun des groupes et entre les différents groupes eux-mêmes. Ce mode d'écriture offre donc le maximum de cohérence et est optimisé le mieux qu'il est possible.

En outre, le fait que les trois groupes d'informations aient la même longueur et que les cellules à l'intérieur de chacun de ces groupes aient également la même longueur montre qu'il est beaucoup plus facile de détecter chacun des groupes d'informations, par rapport aux modes d'écriture selon l'art antérieur.

Selon l'invention, le mode d'écriture sur un support d'enregistrement magnétique, où les informations sont écrites en code binaire et réparties sur une pluralité N de pistes, chaque piste étant associée à une zone de référence qui comprend trois groupes distincts d'informations, un groupe d'informations de préambule, constitué par un ensemble d'informations binaires ayant toutes même valeur précédant un groupe comprenant des informations d'adresse absolue et précé-dant lui-même un groupe contenant des informations de position fine et constitué par une succession d'informations binaires de valeur successive opposée, les groupes de position fine de deux pistes adjacentes contenant des informations binaires respectivement alternées, les informations binaires des zones de référence étant représentées par l'absence ou la présence d'une double transition magnétique, la première étant de signe opposée à la seconde (ces informations binaires étant également dénommées dibits) est caractérisé en ce que les trois groupes d'informations contiennent le même nombre d'informations binaires (k cellules), de même longueur, les groupes ayant en conséquence la même longueur.

D'autres caractéristiques et avantages de l'invention apparaîtront dans la description suivante donnée à titre d'exemple non limitatif et en se référant aux dessins annexés:

Sur ces dessins:

– la figure 1: composée de figures 1a et 1b montrent un exemple préféré de répartition d'informations sur une face d'un disque magnétique, tel que décrits dans le brevet 2.346.806 précité;

– la figure 2: est une vue agrandie de la figure 1a;

– la figure 3: montre comment sont disposées les zones de référence par rapport aux pistes où sont enregistrées les données;

– la figure 4: montre comment sont réparties les informations à l'intérieur des zones de référence de la manière indiquée dans l'IBM Technical Disclosure Bulletin précité;

– la figure 5: est un chéma de principe illustrant comment est réalisée une double transition magnétique (dibit);

– la figure 6: illustre le mode d'écriture d'informations à l'intérieur de zones de référence d'un disque magnétique selon l'invention, dans lequel les informations sont réparties en trois groupes, un premier groupe appelé préambule, un second groupe constituant l'adresse absolue de la piste associée à ladite zone, le troisième groupe contenant des informations de position fine;

— les figures 7, 8, 9: montrent respectivement des exemples détaillés de réalisation des premier, second et troisième groupe précédents.

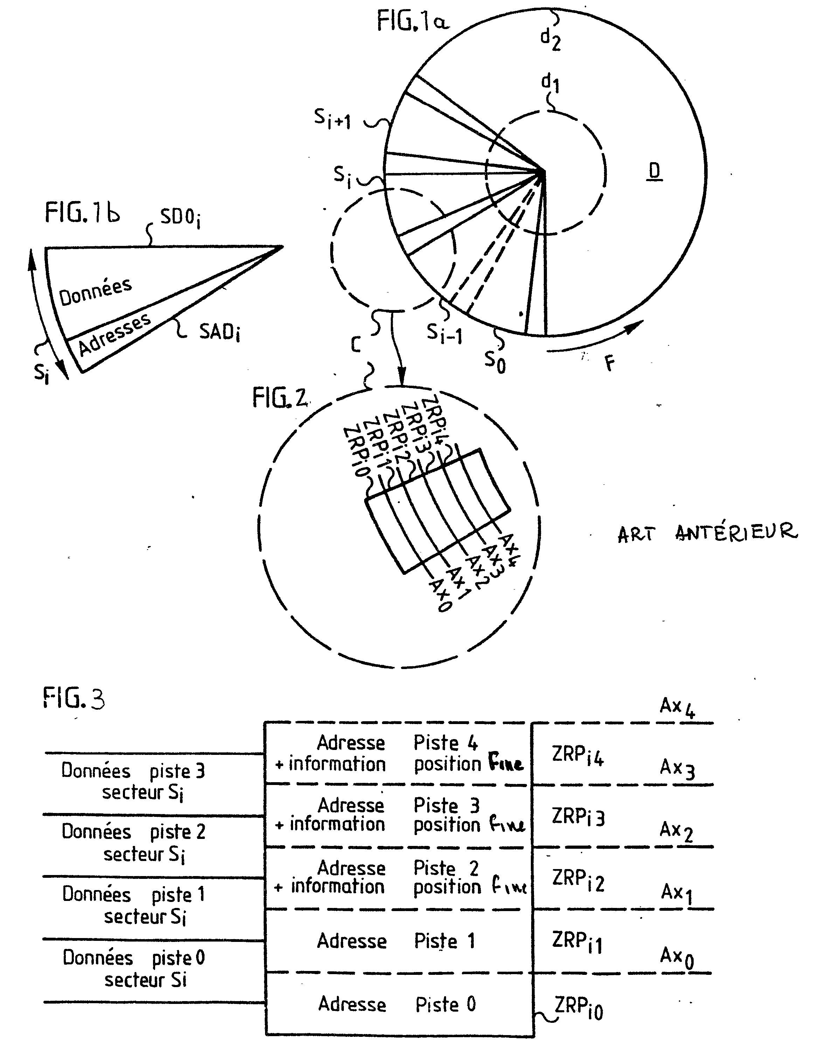

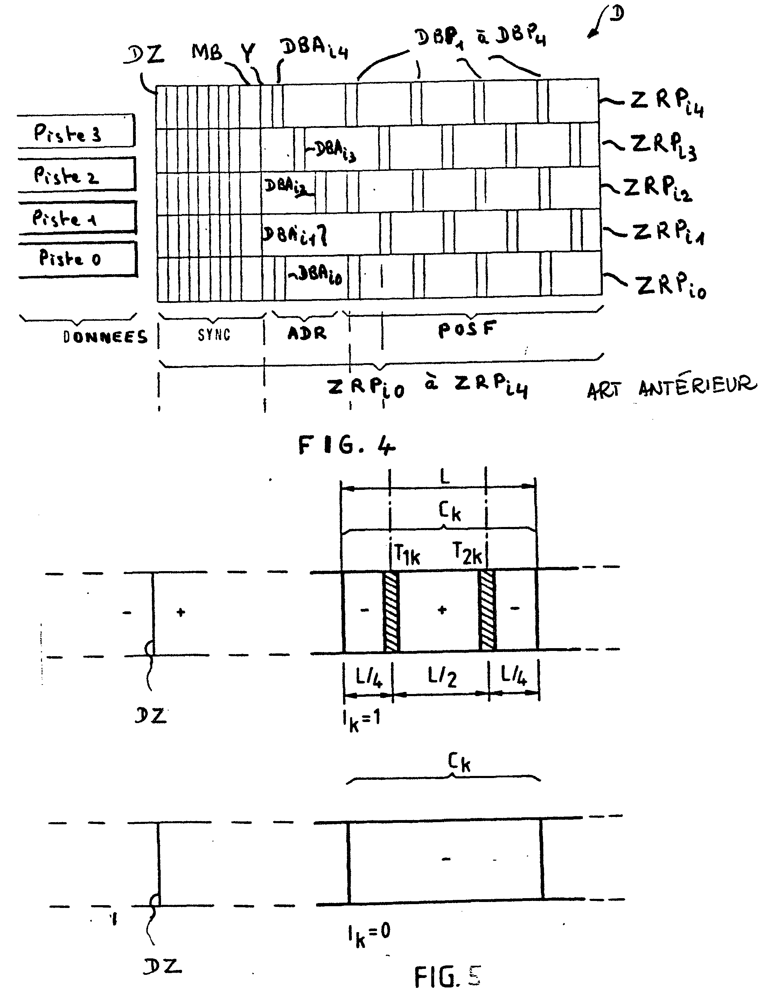

Afin de mieux comprendre comment sont écrites les informations dans les zones de référence d'un support d'enregistrement magnétique selon l'invention, il est nécessaire de faire quelques rappels illustrés par les figures 1, 2, 3, 4, 5 montrant d'une part, comment sont réparties les informations sur la surface d'un support d'enregistrement magnétique qui, de préférence est un disque magnétique (figures 1, 2, 3) et d'autre part un mode d'écriture d'informations à l'intérieur d'une zone de référence selon l'art antérieur (DEREMER figures 3 et 5).

Aux figures 1 à 5, on suppose qu'un écrit des informations dans les zones de référence d'un disque magnétique D.

A la figure 1a, on considère ce disque D qui tourne dans le sens de la flèche F. Sa surface utile d'enregistrement est délimitée par les cercles $d_1$ et $d_2$. On définit sur ce disque n secteurs circulaires égaux et adjacents $S_0$, $S_1$, ..., $S_i$, ..., $S_n$.

Ainsi qu'on peut mieux le voir à la figure 1b, chaque secteur $S_i$ est divisé en deux parties $SDO_i$, $SAD_i$ où sont respectivement enregistrées d'une part les données à traiter, et d'autre part les informations de repérage des pistes. La surface de la partie $SAD_i$ est très inférieure à la surface de la partie $SDO_i$.

Les figures 2 et 3 sont une vue agrandie de la partie $SAD_i$ des secteurs $S_i$ comprise à l'intérieur du cercle C.

Chaque partie $SAD_i$ d'un secteur $S_i$ est divisé en N zones de référence $ZRP_{i0}$ $ZRP_{ij}$ $ZRP_{i(n-1)}$. Pour simplifier, on n'a représenté que les premières zones de référence $ZRP_{i0}$ à $ZRP_{i4}$ aus figures 2 et 3, lesquelles sont symbolisées par des rectangles à la figure 3.

Les frontières entre les différentes zones de référence $ZRP_{ij}$ sont les axes magnétiques circulaires $Ax_j$ des pistes d'enregistrement du disque magnétique D. On voit que dans chaque secteur $S_i$, à la piste de numéro d'ordre j, d'axe $Ax_j$ est associée à la zone de référence $ZRP_{ij}$. Ainsi à la piste de numéro d'ordre 0, est associée la zone de référence $ZRP_{i0}$, à la piste de numéro d'ordre 1 est associée la zone de référence $ZRP_{i1}$ et ainsi de suite.

Ainsi qu'on peut le voir à la figure 3, chaque zone de référence contient, ainsi qu'il est décrit dans les brevets français 2.346.806 et 2.426.940 précités, des bits d'adresse (absolue) et des informations binaires de position fine. Ainsi qu'il a été décrit plus haut, les bits d'adresse et les informations binaires de position fine sont alternés.

On considère la figure 4 qui montre le mode d'écriture d'informations à l'intérieur des zones de référence d'un disque D, tel que décrit dans l'IBM Technical Disclosure Bulletin de DEREMER. De même qu'à la figure 3, on a représenté à la figure 4, 5 zones de référence à savoir les zones $ZRP_{i0}$ à $ZRP_{i4}$ ces zones étant symbolisées par des rectangles. On appelle DZ le début de chaque zone.

Ainsi qu'on peut le voir à la figure 4, chacune des zones de référence $ZRP_{i0}$ à $ZRP_{i4}$ comprend:

— un premier groupe d'informations SYNC, de synchronisation qu'on peut appeler également informations de préambule, comprenant quatre doubles transitions magnétiques (dibits) la description détaillée du mode de réalisation d'une double transition magnétique étant décrite plus bas en référence à la figure 5. Ces quatre doubles transitions magnétiques sont utilisées dans les circuits de lecture de la mémoir à disques pour reconnaître les zones de référence, c'est-à-dire faire la différence entre les zones de données et les zones de référence. Il est clair que ces informations de synchronisation peuvent également servir à la détermination du gain des amplificateurs du circuit de lecture de la mémoire à disques contenant le disque D. Dans le groupe d'informations SYNC les quatre doubles transitions magnétiques sont suivie d'une cellule où il y a absence de transition magnétique, à savoir MB, elle-même suivie d'une cellule suivie d'une seule transition magnétique, à savoir Y. On peut donc dire que la partie SYNC contient cinq cellules et demie contenant une double transition magnétique;

— un second groupe d'informations ADR contenant une seule double transition magnétique constituant un bit d'adresse relative, les informations d'adresse relative se reproduisant identiquement à elles-même toutes les quatre zones de référence. Ainsi si il y a N pistes, il y a N/4 groupes d'informations d'adresses relatives. Ces double transitions d'adresse relative sont respectivement dénommées $DBA_{i0}$ à $DBA_{i4}$ dans les cinq zones de référence $ZRP_{i0}$ à $ZRP_{i4}$. On notera que dans la zone de référence $ZRP_{il}$ la double transition $DBA_{il}$ est absente;

— un groupe POSF d'informations de position fine comprenant quatre double transitions magnétiques (dibits), à savoir $DBP_1$ à $DBP_4$. Ces quatre dibits de position fine sont disposées de telle façon qu'il y a rupture de continuité d'un dibit d'une zone au dibit de la zone voisine (on observe bien ce fait en considérant par exemple le premier dibit $DBP_1$ dans les zones de référence $ZRP_{i4}$ et $ZRP_{i3}$).

Les inconvénients du mode d'écriture des zones de référence, représentées à la figure 4, ont été mentionnés plus haut. L'inconvénient majeur de ce mode d'écriture réside dans l'absence de cohérence dans la façon d'écrire les informations dans chacun des trois groupes SYNC, ADR, POSF, et dans la différence de longueur entre chacun de ceux-ci.

On considère la figure 5, qui montre de façon détaillée la structure d'une double transition magnétique. Sur cette même figure 5, on a représenté une portion d'une zone de référence $ZRP_{ij}$ (par exemple l'une des zones de la figure 4), à savoir le début de la zone avec sa première transition magnétique DZ et une cellule élémentaire quelconque $C_k$ de celle-ci contenant une double transition magnétique. On rappelle que l'on définit un dibit, comme la présence ou l'absence d'une double transition magnétique. Si on le désigne par $I_k$ on suppose qu'il est égal à 1 lorsqu'il y a présence d'une double transition magnétique, alors qu'il est égal à 0 lorsqu'il y a absence de celle-ci. La double transition magnétique $I_k$ comprend une première transition magnétique $T_{1k}$ de signe opposé à la seconde transition magnétique $T_{2k}$. Par exemple, la première transition $T_{1k}$ est positive alors que la seconde transition est négative.

Lorsque le dibit $I_k$ est égal à 1, la longueur de la partie de la cellule $C_k$ où l'induction magnétique est positive est égale à la longueur totale de la partie de cellule où l'induction est négative. Ainsi, si la première transition magnétique $T_{1k}$ est positive et la seconde $T_{2k}$ est négative, la longueur de l'aimant, élémentaire central de la cellule $C_k$ où l'induction magnétique est positive, est égale à L/2 alors que la longueur des deux aimants élémentaires d'induction magnétique est négative est égale à L/4. On a représenté chaque transition magnétique par un double trait à la figure 5. On voit que, lorsque la cellule $C_k$ ne comporte pas de double transition magnétique, l'induction magnétique est uniforme à l'intérieur, par exemple négative dans le mode de réalisation représenté à la figure 5.

On montre que le mode d'écriture, par double transition magnétique, permet une détection plus précis des informations représentées par celles-ci, ce qui réduit considérablement les risques d'erreurs dans la détermination de la valeur des bits correspondants et permet d'éliminer pratiquement toute prise en compte de la quasi totalité des signaux parasites pouvant survenir lorsqu'une zone de référence $ZRP_{ij}$ défile devant une tête magnétique.

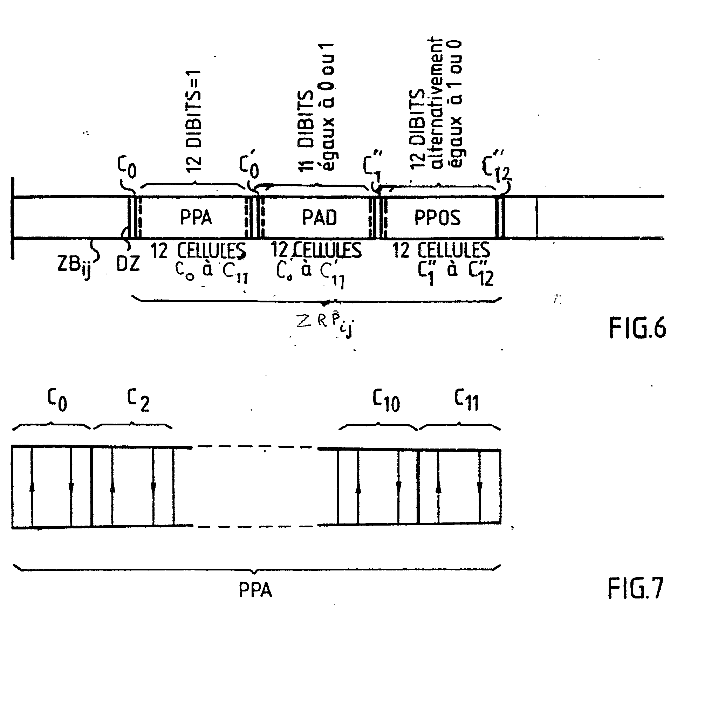

Ainsi qu'on peut le voir à la figure 6, le mode d'écriture d'informations à l'intérieur d'une zone de référence $ZRP_{ij}$ d'un disque magnétique D, selon l'invention est tel que les trois parties distinctes PPA, PAD, PPOS contenant respectivement des informations de préambule, des bits d'adresse absolue de la piste de numéro d'ordre j à laquelle est associée la dite zone de référence et des informations de position fine sont de longueur égale, contiennent le même nombre de cellules, les cellules ayant partout la même longueur, par exemple la longueur L indiquée à la figure 5.

Ce mode de répartition des informations à l'intérieur d'une zone de référence $ZRP_{ij}$ permet d'accroître la précision de leur détection, en évitant que, lors de celle-ci, les signaux correspondants à un type d'informations (adresse par exemple), ne viennent perturber les signaux correspondants à un autre type d'informations (informations de position fine par exemple), ce qui est le cas dans le mode d'écriture selon l'art antérieur décrit dans les brevets 2.346.806 et 2.426.940 précités. De plus, ce mode d'écriture selon l'invention permet d'éviter les inconvénients du mode d'écriture selon l'art antérieur représenté à la figure 4, en ce sens qu'il permet de réaliser une structure parfaitement cohérente où la cellule élémentaire d'informations a toujours la même longueur, chacun des groupes d'informations ayant également la même longueur. De ce fait, il est beaucoup plus facile de détecter chacun des groupes d'informations.

La partie préambule PPA contient un certain nombre de «dibits», l'exploitation des signaux correspondant à ces dibits par les circuits de lecture/écriture de la mémoire à disques permettant de déterminer le gain des amplificateurs de ces circuits de telle sorte que la précision de lecture des adresses et des informations de position fine soit la plus grande possible. Dans une forme de réalisation préférée de l'invention, la partie préambule PPA contient 12 cellules identiques $C_0$ à $C_{11}$ comportant des dibits identiques correspondant à des bits égaux à 1. Cette forme de réalisation préférée de la partie préambule PPA est représentée à la figure 7 où l'on a fait figurer les transitions magnétiques positives par un trait muni d'une flèche dirigée vers le haut et des transitions magnétiques négatives par un trait avec une flèche dirigée vers le bas et ce afin de simplifier le dessin.

Dans une forme de réalisation de l'invention (voir figure 6) la partie PAD qui comprend les adresses se compose de douze cellules $C'_0$ à $C'_{11}$ contenant chacune un «dibit».

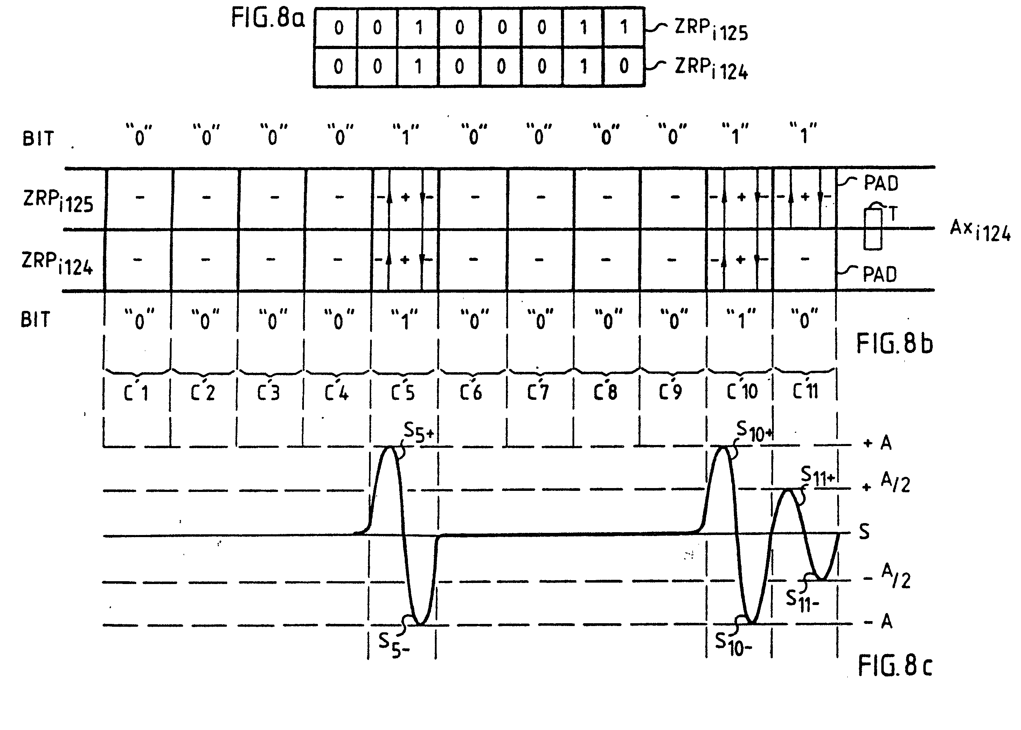

L'une des cellules par exemple la première cellule $C'_0$ contient un «dibit» qui correspond à un «bit» d'information indiquant la parité de la piste. Les «dibits» contenus dans les onze autres cellules $C'_1$ et $D'_{11}$ correspondent aux «bits» de l'adresse de la piste associée à la zone de référence $ZRP_{ij}$ contenant ladite partie PAD. Si l'on désigne par k le ombre de «bits» de l'adresse d'une piste, on sait que celui-ci est tel que $2_k$ soit supérieur ou égal au nombre N de pistes d'enregistrement. Ainsi, si K = 11, le nombre de pistes maximum que peut représenter un code binaire à 11 «bits» est égal à 2.048 ($2.048 = 2^{11}$). Dans l'exemple de réalisation décrit ici, les «dibits» qui correspondent aux poids forts de l'adresse précèdent les «dibits» correspondant aux poids faibles. Ainsi, les cellules contenant les dibits correspondant aux poids forts sont situées sur la gauche des figures 6 et 8, les cellules contenant les «dibits» correspondant aux poids faibles étant situées sur la droite de ces mêmes figures. En conséquence, la cellule $C'_1$ contient le «dibit» correspondant au poids le plus fort de l'adresse alors que la cellule $C'_{11}$ contient le «dibit» correspondant au poids le plus faible.

On considère la figure 8 qui représente deux parties PAD de deux zones de référence voisines à savoir les zones $ZRP_{i124}$ et $ZRP_{i125}$, les adresses des deux pistes correspondant à ces deux zones étant écrites selon le mode d'écriture de l'invention, de préférence dans un code binaire réfléchi ou code «GRAY». Une description de se code est donnée par exemple dans le livre de H.SOUBIES CAMY publié aux éditions Dunod en 1961 aux pages 253 et 254.

Pour simplifier la figure 8, on n'a pas fait figurer, pour chacune des deux zones $ZRP_{i124}$ et $ZRP_{i125}$ la cellule $C'_0$ contenant le «dibit» indiquant la parité de l'adresse. On désignera par $DB_1$ à $DB_{11}$ les «dibits» contenus respectivement dans chacune des cellules $C'_1$ à $C'_{11}$.

La figure 8a donne l'expression en code «GRAY» des nombres 124 et 125.

La figure 8b montre comment les adresses des pistes 124 et 125 sont écrites sur le disque magnétique, en code «GRAY» à l'intérieur des zones de référence $ZRP_{i124}$ et $ZRP_{i125}$.

La figure 8c montre les signaux de lecture des adresses écrites dans les zones $ZRP_{i124}$ et $ZRP_{i125}$ par la tête de lecture et/ou d'écriture T, celle-ci étant supposée parfaitement centrée sur l'axe $Ax_{i124}$ de la piste d'adresse 124, qui est l'axe magnétique faisant office de frontière entre les deux zones précitées. On peut dire, en d'autres termes, que la tête T est disposée à cheval sur les deux zones.

Ainsi qu'on peut le voir à la figure 8a, la caractéristique essentielle du code «GRAY» réside dans le fait que deux adresses successives se distinguent par le changement d'un seul «bit» entre elles. Ainsi les adresses 124 et 125 écrites en code «GRAY» diffèrent par le dernier «bit» égal à 0 pour la piste 124 et égal à 1 pour la piste 125.

On a supposé à la figure 8b, que le mode de représentation des «dibits» est identique à celui de la figure 7, l'absence de double transition magnétique dans les cellules $C'_1$ à $C'_{11}$ correspondant à des «bits» d'adresse égaux à 0, la présence d'une double transition correspondant á un «bit» d'adresse égal à 1. On a également fait figurer sur la figure 8b, le signe de l'induction magnétique dans chacune des cellules $C'_1$ à $C'_{11}$ et on a indiqué la valeur du «bit» correspondant à chaque «dibit» $DB_1$ à $DB_{11}$ de chacune des adresses des pistes 124 et 125.

On voit que les cellules $C'_5$ et $C'_{10}$ des deux zones $ZRP_{i124}$ et $ZRP_{i125}$ contiennent une double transition magnétique, ainsi que la cellule $C'_{11}$ de la zone $ZRP_{i125}$, aucune des autres cellules des deux zones précitées ne contenant de couble transition magnétique.

Ainsi qu'on peut le voir à la figure 8c, le signal délivré par la tête T, est constitué par la suite des impulsions analogiques $S_{5+} - S_{5-}$; $S_{10+} - S_{10-}$; $S_{11+} - S_{11-}$. Les impulsions $S_{5+}$ et $S_{5-}$ correspondent à la double transition magnétique des cellules $C'_5$ des deux zones $ZRP_{i124}$ et $ZRP_{i125}$, les signaux $S_{10+}$ et $S_{10-}$ correspondent à la double transition des cellules $C'_{10}$ des mêmes zones et les signaux analogiques $S_{11+}$ et $S_{1-}$ correspondent à la double transition magnétique de la cellule $C'_{11}$ de la zone $ZRP_{i125}$. Les signaux analogiques $S_{5+}$, $S_{10+}$ et $S_{11+}$ sont positifs alors que les signaux $S_{5-}$, $S_{10-}$ et $S_{11-}$ sont négatifs. Si les amplitudes des signaux $S_{5+}$ et $S_{10+} - S_{5-}$ et $S_{10-}$ sont respectivement égales à $(+A)$ et $(-A)$, (l'amplitude du signal de lecture délivré par la tête T étant supposée maximum) on voit que les amplitudes des signaux analogiques $S_{11+}$ et $S_{11-}$ sont respectivement égales à $(+A/2)$ et $(-A/2)$. Il est clair que, pour les cellules $C'_1$ à $C'_4$ et $C'_6$ à $C'_9$ le signal correspondant délivré par la tête T est nul.

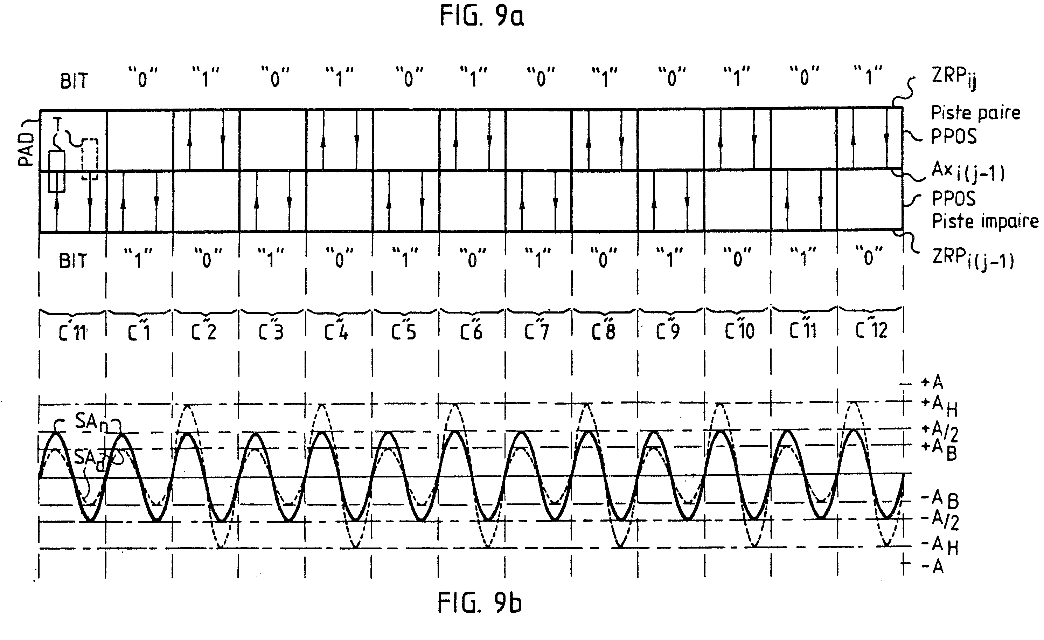

On considère la figure 9a qui représente deux parties PPOS de deux zones de référence voisines $ZRP_{i(j-1)}$ supposée impaire et $ZRP_{ij}$ supposée paire. On suppose que, dans l'exemple de réalisation décrit ici, chacune des deux parties PPOS des dites zones de référence contient douze cellules $C''_1$ à $C''_{12}$. On a également fait figurer à la même figure 9a la dernière cellule $C'_{11}$ des deux parties PAD des mêmes zones $ZRP_{1(j-1)}$ et $ZRP_{ij}$.

On voit que les cellules d'ordre impair $C''_1$, $C''_3$, $C''_5$, $C''_7$, $C''_9$, $C''_{11}$ de la zone de référence correspondant à une piste paire $ZRP_{ij}$ contiennent des «dibits» correspondant à des «bits» d'information de position fine égaux à 1. On voit, d'autre part, que dans la partie PPOS d'une zone de référence correspondant à une piste impaire, les cellules d'ordre impair $C''_1$ à $C''_{11}$ contiennent des «dibits» correspondant à des bits d'information de position fine égaux à 1, alors que les cellules d'ordre pair $C''_2$ à $C''_{12}$ contiennent des «dibits» correspondant à des bits d'informations de position fine égaux à 0.

En conclusion, on peut dire que, aussi bien pour les pistes paires que pour les pistes impaires, la partie PPOS contient une succession de douze cellules se caractérisant par le fait qu'il y a alternativement présence et absence de toute transition magnétique pour des cellules successives. On peut dire également, que le mode d'écriture des informations dans la partie PPOS est identique, qu'il s'agisse d'une piste paire ou impaire, les informations étant simplement décalées d'une cellule à l'autre; ainsi, la cellule $C'_1$ d'une piste paire de numéro d'ordre $(j-1)$ ou $(j+1)$ en contient une, la cellule $C'_2$ de la partie PPOS de la piste paire de numéro d'ordre j contenant une double transition, la cellule $C'_2$ de la piste impaire voisine du numéro d'ordre $(j-1)$ ou $(j+1)$ n'en contenant pas et ainsi de suite. Cette disposition se retrouve dans la partie POSF de la figure 4 illustrant l'art antérieur. La figure 9b présente deux types de signaux analogiques délivrés par la tête de lecture et/ou d'écriture T, selon la position qu'elle occupe par rapport à l'axe magnétique $Ax_{i(j-1)}$ de la piste de numéro d'ordre $(j-1)$.

Lorsque la tête T se trouve parfaitement centrée sur l'axe $Ax_{i(j-1)}$, le signal analogique délivré par celle-ci est $SA_n$.

Lorsque la position de la tête T est sensiblement telle que les deux tiers de celle-ci se trouvent situés en regard de la partie PPOS de la zone de référence $ZRP_{ij}$, l'autre tiers de la tête se trouvant en regard de la partie PPOS de la zone de référence $ZRP_{i(j-1)}$, le signal analogique délivré est $SA_d$ (indiqué par un trait interompu à la figure 9a).

Ainsi qu'on peut le voir sur cette même figure, le signal analogique $SA_n$ est un signal de tension moyenne nulle dont la tension varie entre une valeur maximum positive $(+A/2)$ et une valeur maximum négative $(-A/2)$. On voit que le signal $SA_n$ est de forme sensiblement sinusoïdale.

On considère le signal $SA_d$. On voit que sa tension est comprise entre la valeur maximum positive $(+A_b)$ et une valeur minimum négative

(–$A_b$) lorsque la tête T se trouve au-dessus des cellules d'ordre impair $C''_1$, $C''_3$, ..., $C''_{11}$ et entre une valeur maximum positive (+$A_h$) et une valeur maximum négative (–$A_h$) lorsque la tête T se trouve au-dessus des cellules d'ordre paire $C''_2$, $C''_4$, $C''_6$, ..., $C''_{12}$.

On montre qu'une telle disposition des «bits» de position fine à l'intérieur de la partie PPOS d'une zone, permet, lors dela lecture de ceux-ci, d'éviter presque totalement les phénomènes d'interférences entre les signaux provenant des informations de deux zones de référence voisines correspondant à des pistes de numéro d'ordre j et (j–l) d'une part, j et (j+l) d'autre part.

## Revendications

1. Mode d'écriture sur un support d'enregistrement magnétique (D) où les informations sont écrites en code binaire et sont réparties sur une pluralité N de pistes, chaque piste étant associée à une zone de référence ($ZRP_{ij}$) qui comprend trois groupes distincts d'informations, un groupe d'informations de préambule (PPA), constitué par un ensemble d'informations binaires ayant toutes la même valeur, précédant un groupe (PAD) comprenant des informations d'adresse absolue précédant lui-même un groupe (PPOS), qui contient des informations de position fine constituées par une succession d'informations binaires successives opposées, les zones de position fine de deux pistes adjacentes contenant des informations binaires respectivement alternées, les informations binaires des zones de référence étant représentées par l'absence ou la présence d'une double transition magnétique la première étant de signe opposé à la seconde (dibit), caractérisé en ce que les trois groupes d'informations contiennent le même nombre d'informations binaires (k cellules) contenues chacune dans des cellules de même longueur, c'est-à-dire que ces trois groupes ont même longueur.

2. Support d'enregistrement magnétique (D) où les informations sont écrites en code binaire et sont réparties sur une pluralité N de pistes, chaque piste étant associée à une zone de référence ($ZRP_{ij}$) qui comprend trois groupes distincts d'informations, un groupe d'informations de préambule (PPA) constitué par un ensemble d'informations binaires ayant toutes la même valeur, précédant un groupe (PAD) comprenant des informations d'adresse absolue, précédant lui-même un groupe (PPOS), qui contient des informations de position fine constituées par une succession d'informations binaires de valeurs successives opposées, les zones de position fine de deux pistes adjacentes contenant des informations binaires respectivement alternées, les informations binaires des zones de référence étant représentées par l'absence ou la présence d'une double transition magnétique, la première étant de signe opposé à la seconde (dibit), caractérisé en ce que les trois groupes d'informations contiennent le même nombre d'informations binaires contenues dans k cellules de même longueur, c'est-à-dire que les trois groupes ont la même longueur.

## Patentansprüche

1. Verfahrensweise zum Einschreiben auf einem magnetischen Aufzeichnungsträger (D), auf dem die Informationen in Binärcode aufgezeichnet werden und auf eine Mehrzahl von N Spuren verteilt werden, wobei jede Spur einer Bezugszone ($ZRP_{ij}$) zugeordnet ist, die drei verschiedene Informationsgruppen umfasst, eine Kopfinformationsgruppe (PPA), die gebildet ist aus einer Menge von Binärinformationen, die alle denselben Wert aufweisen, und die einer Gruppe (PAD) vorausgeht, welche Absolut-Adressinformationen enthält und die ihrerseits einer Gruppe (PPOS) vorausgeht, welche Feinpositionsinformationen enthält, die gebildet sind aus einer Aufeinanderfolge von aufeinanderfolgenden entgegengesetzten Binärinformationen, wobei die Feinpositionszonen für zwei nebeneinanderliegende Spuren jeweils abwechselnde Binärinformationen enthalten und die Binärinformationen der Bezugszonen dargestellt sind durch das Fehlen oder das Vorhandensein eines doppelten magnetischen Überganges, von denen der erste das entgegengesetzte Vorzeichen wie der zweite hat (dibit), dadurch gruppe (PPA), die gebildet ist aus einer Menge von Binärinformationen, die alle denselben Wert aufweisen, und die einer Gruppe (PAD) vorausgeht, welche Absolut-Adressinformationen umfasst und ihrerseits einer Gruppe (PPOS) vorausgeht, welche Feinpositionsinformationen enthält, die gebildet sind aus einer Aufeinanderfolge von Binärinformationen mit aufeinanderfolgenden entgegengesetzten Werten, wobei die Feinpositionszonen von zwei nebeneinanderliegenden Spuren Binärinformationen enthalten, die jeweils miteinander abwechseln, und wobei die Binärinformationen der Bezugszonen dargestellt sind durch das Fehlen oder das Vorhandensein eines doppelten magnetischen Übergangs, von denen der erste das entgegengesetzte Vorzeichen wie der zweite aufweist (dibit), dadurch gekennzeichnet, dass die drei Informationsgruppen dieselbe Anzahl von Binärinformationen enthalten, die in k Feldern derselben Länge enthalten sind, d.h. die drei Gruppen dieselbe Länge aufweisen.

## Claims

1. Mode of writing on a magnetic data carrier (D) on which the data are recorded in binary code and are distributed over a plurality N of tracks, each track being associated with a reference zone ($ZRP_{ij}$) which comprise three distinct groups of data, a group of preamble data (PPA) formed by a set of binary data all having the same value, preceding a group (PAD) comprising absolute address data, which itself precedes a group (PPOS) which contains precise position data formed by a succession of opposed successive binary data, the precise position zones of two adjacent tracks containing alternate binary data respectively, the binary data of the reference zones being represented by the absence or presence of a double magnetic transition, the first having the opposite sign to that of the second (dibit), characterized in that the three groups of data contain the same number of binary data (k cells) each contained in cells of the same length, that is to say that these three groups have the same length.

2. Magnetic data carrier (D) on which the data are recorded in binary code and are distributed over a plurality N of tracks, each track being associated with a reference zone (ZRP$_{ij}$) which comprises three distinct groups of data, a group of preamble data (PPA) formed by a set of binary data all having the same value, preceding a group (PAD) comprising absolute address data, which itself precedes a group (PPOS) which contains precise position data formed by a succession of binary data, of successive opposed values the precise position zones of two adjacent tracks containing alternate binary data respectively, the binary data of the reference zones being represented by the absence or presence of a double magnetic transition, the first having the opposite sign to that of the second (dibit), characterized in that the three groups of data contain the same number of binary data contained in k cells of the same length, that is to say that the three groups have the same length.

0010494

FIG.1a

$d_2$

$d_1$

$S_{i+1}$

$S_i$

$\underline{D}$

$S_{i-1}$

$S_0$

F

FIG.1b

$SD0_i$

Données

Adresses

$SAD_i$

$S_i$

C

FIG.2

ZRPi4
ZRPi3
ZRPi2
ZRPi1
ZRPi0

$Ax0$
$Ax1$
$Ax2$
$Ax3$
$Ax4$

ART ANTÉRIEUR

FIG.3

| | | | $Ax_4$ |
|---|---|---|---|
| Données piste 3 secteur $S_i$ | Adresse + information | Piste 4 position Fine | ZRPi4 |
| | | | $Ax_3$ |
| Données piste 2 secteur $S_i$ | Adresse + information | Piste 3 position Fine | ZRPi3 |
| | | | $Ax_2$ |
| Données piste 1 secteur $S_i$ | Adresse + information | Piste 2 position Fine | ZRPi2 |
| | | | $Ax_1$ |
| Données piste 0 secteur $S_i$ | Adresse | Piste 1 | ZRPi1 |
| | | | $Ax_0$ |
| | Adresse | Piste 0 | ZRPi0 |

11

DZ  MB  Y  DBA_{i4}  DBP_1 à DBP_4  D

Piste 3
Piste 2
Piste 1
Piste 0

$DBA_{i3}$

$DBA_{i2}$

$DBA_{i1}$

$DBA_{i0}$

$ZRP_{i4}$
$ZRP_{i3}$
$ZRP_{i2}$
$ZRP_{i1}$
$ZRP_{i0}$

DONNEES | SYNC | ADR | POSF

$ZRP_{i0}$ à $ZRP_{i4}$     ART ANTÉRIEUR

FIG. 4

L

$C_k$

$T_{1k}$  $T_{2k}$

−  +  −

L/4  L/2  L/4

$I_k = 1$

DZ

$C_k$

−

$I_k = 0$

DZ

FIG. 5

FIG.6

FIG.7

FIG.8a — table: ZRP$_{i125}$: 0 0 1 0 0 0 1 1 ; ZRP$_{i124}$: 0 0 1 0 0 0 1 0

FIG.8b

FIG.8c

# FIG. 9a

| BIT | "0" | "1" | "0" | "1" | "0" | "1" | "0" | "1" | "0" | "1" | "0" | "1" | $ZRP_{ij}$ |

Piste paire

PPOS

$Ax_{i(j-1)}$

PPOS

Piste impaire

| BIT | "1" | "0" | "1" | "0" | "1" | "0" | "1" | "0" | "1" | "0" | "1" | "0" | $ZRP_{i(j-1)}$ |

$C\tilde{1}1$ | $C\tilde{1}$ | $C\tilde{2}$ | $C\tilde{3}$ | $C\tilde{4}$ | $C\tilde{5}$ | $C\tilde{6}$ | $C\tilde{7}$ | $C\tilde{8}$ | $C\tilde{9}$ | $C\tilde{10}$ | $C\tilde{11}$ | $C\tilde{12}$

+A
+$A_H$
+A/2
+$A_B$

$SA_n$
$SA_d$

−$A_B$
−A/2
−$A_H$
−A

# FIG. 9b

0010494